# EUROPEAN PATENT APPLICATION

(11) **EP 4 800 445 A1**
(43) Date of publication of application: **02.09.2026**
(21) Application number: 24881656.3
(22) Date of filing: 23.10.2024
(51) Int. Cl.: G02B 5/18, G03F 7/20

(54) **MANUFACTURING APPARATUS AND MANUFACTURING METHOD FOR REFLECTIVE VOLUME HOLOGRAPHIC GRATING**

(30) Priority: 26.10.2023 CN 202311404563
(71) Applicant: Meta-Bounds Inc., Zhuhai, Guangdong 519000 (CN)
(72) Inventor: MA, Guoqing, Zhuhai, Guangdong 519000 (CN); LAN, Fuyang, Zhuhai, Guangdong 519000 (CN); GUAN, Jian, Zhuhai, Guangdong 519000 (CN); WANG, Zhaomin, Zhuhai, Guangdong 519000 (CN)
(74) Representative: Agca Kizil, Tugce
(86) International application number: PCT/CN2024/126799
(87) International publication number: WO 2025/087292

(57) **Abstract**

The present disclosure discloses an apparatus and a method for fabricating reflection-type volume holographic gratings. The apparatus includes a light source and an exposure module; the exposure module includes a photomask with at least one optical diffraction structure, a recording medium, a coupling prism and an exposure modulation unit; the optical diffraction structure receives an incident recording beam output by the light source and diffracts and splits the incident recording beam to obtain a reflected diffracted beam; the coupling prism adjusts the incident recording beam to be incident on the recording medium at a preset angle, and the incident recording beam and the reflected diffracted beam are input into the recording medium to form volume holographic gratings; the exposure modulation unit controls exposure parameters on the recording medium to obtain exposed reflection-type volume holographic gratings.

## Description

### TECHNICAL FIELD

The present disclosure relates to the technical field of holographic gratings fabrication, and in particular to an apparatus and a method for fabricating reflection-type volume holographic gratings.

### BACKGROUND

Volume holographic grating waveguides are applied in augmented reality display systems or mixed reality display systems due to their capability to provide a larger field of view, better optical display effects, and a thinner and lighter volume. In the prior art, the fabricating process of volume holographic gratings is performed by dual-beam exposure equipment, and interference fringes are highly sensitive to environmental disturbance, temperature, humidity and other aspects, and it is difficult to achieve high-quality and large-scale fabrication of volume holographic gratings.

Therefore, there is still room for improvement in the prior art.

### SUMMARY OF THE INVENTION

In view of the above shortcomings in the prior art, the purpose of the present disclosure is to provide an apparatus and a method for fabricating reflection-type volume holographic gratings, which overcome the defect that the fabricating process of volume holographic gratings in the prior art is difficult to achieve high-quality and large-scale manufacturing of volume holographic gratings.

Technical solutions adopted by the present disclosure to solve the technical problems are as follows.

In a first aspect, embodiments of the present disclosure provide an apparatus for fabricating reflection-type volume holographic gratings, including: a light source and an exposure module located on a light-emitting optical path of the light source;
where the exposure module includes: a photomask with at least one optical diffraction structure, a recording medium, a coupling prism, and an exposure modulation unit;
the light source is configured to provide an incident recording beam;
the at least one optical diffraction structure on the photomask is configured to receive the incident recording beam and diffract and split the incident recording beam to obtain a reflected diffracted beam;
the coupling prism is configured to adjust an angle at which the incident recording beam is incident into the photomask, in which the incident recording beam is incident on the recording medium at a preset angle, and eliminate background interference noise caused by non-ideal refraction and reflection of the incident recording beam on an interface, so as to further improve the signal-to-noise ratio of target interference fringes;
the recording medium is configured to generate interference fringes according to the incident recording beam and the reflected diffracted beam, and form a refractive index difference between an interference intensity enhancement region and an interference intensity attenuation region to form volume holographic gratings;
the exposure modulation unit is configured to control exposure parameters on the recording medium to obtain exposed reflection-type volume holographic gratings.

In a second aspect, embodiments of the present disclosure further provide a method for fabricating reflection-type volume holographic gratings, including:
preparing a recording medium;
preparing an optical diffraction structure;
building an apparatus for fabricating reflection-type volume holographic gratings according to the recording medium and the optical diffraction structure;
obtaining exposed reflection-type volume holographic gratings by the apparatus for fabricating reflection-type volume holographic gratings.

The present embodiment discloses an apparatus and a method for fabricating reflection-type volume holographic gratings. The apparatus for fabricating reflection-type volume holographic gratings includes: a light source and an exposure module; the exposure module includes: a photomask with at least one optical diffraction structure, a recording medium, a coupling prism, and an exposure modulation unit. An incident recording beam provided by the light source is incident on the optical diffraction structure on the photomask, and the optical diffraction structure receives the incident recording beam and diffracts and splits the incident recording beam to obtain a reflected diffracted beam; the coupling prism adjusts an angle at which the incident recording beam is incident into the photomask, so that the incident recording beam is incident on the recording medium at a preset angle, and the recording medium generates interference fringes according to the incident recording beam and the reflected diffracted beam and changes the refractive index to form a volume holographic grating; the exposure modulation unit controls exposure parameters on the recording medium to obtain an exposed reflection-type volume holographic grating. In the apparatus of the present embodiment, reflection-type volume holographic gratings with multi-degree-of-freedom modulation are generated by adjusting the incident angle of the incident recording beam and controlling the exposure parameters by using the exposure modulation unit, and the implementation is simple and efficient.

### BRIEF DESCRIPTION OF THE DRAWINGS

FIG. 1 is a schematic structural diagram of an exposure module in an embodiment of the present disclosure;
FIG. 2 is a schematic structural diagram of an apparatus for fabricating reflection-type volume holographic gratings in an embodiment of the present disclosure;
FIG. 3 is a schematic diagram of a principle of synchronous exposure of gratings with different grating parameters in an embodiment of the present disclosure;
FIG. 4 is a schematic flowchart of a method for fabricating reflection-type volume holographic gratings in an embodiment of the present disclosure.

### DETAILED DESCRIPTION

In order to make the purpose, technical solutions and advantages of the present disclosure clearer, the present disclosure will be described in further detail below with reference to the accompanying drawings and embodiments. It should be understood that the embodiments described are used to explain the present disclosure and are not used to limit the present disclosure.

The embodiments of the present disclosure are described below through the examples, and those skilled in the art can easily understand other advantages and effects of the present disclosure from the content disclosed in this specification. The present disclosure may also be implemented or applied through other different embodiments, and various details in this specification may also be modified or changed according to different viewpoints and applications without departing from the spirit of the present disclosure.

When describing the embodiments of the present disclosure in detail, for the convenience of explanation, the cross-sectional views showing the device structure are partially enlarged not in accordance with the general scale, and the schematic diagrams are examples, which should not limit the protection scope of the present disclosure. In addition, the actual fabrication should include three-dimensional spatial dimensions of length, width and depth.

It should be noted that the drawings provided in the present embodiment illustrate the basic idea of the present disclosure in a schematic manner, so the drawings show components related to the present disclosure rather than the number, shape and size of components in actual implementation. The shape, number and proportion of each component in actual implementation may be changed arbitrarily, and the component layout may also be more complex.

A flat waveguide integrated system is an indispensable key optical module in fields such as augmented reality (AR) and optical computing. A beam carrying object information is coupled into a flat waveguide through a diffraction device such as gratings, and then the diffraction angle of the diffracted beam is transmitted in the flat waveguide due to meeting the total internal reflection requirement, and finally output from the waveguide through another grating diffraction device. At present, surface relief gratings based on nanoimprinting have initially achieved mass fabrication. However, augmented reality (AR) systems based on surface relief gratings still face problems restricting performance such as rainbow effect and small field of view (FOV).

Volume holographic gratings are considered as a mandatory technology for next-generation augmented reality (AR) systems due to their capability to provide a larger field of view, better optical display effects and a thinner and lighter volume. However, the fabricating process of volume holographic gratings is accomplished by means of dual-beam exposure equipment, and interference fringes are very sensitive to various factors such as environmental disturbance, temperature and humidity. Therefore, a series of technologies such as vibration isolation, fringe locking and grating period measurement must be adopted to ensure the stability of interference fringes, which makes it difficult to achieve high-quality and large-scale fabrication of volume holographic gratings.

According to the diffraction effect of gratings, a technology for fabricatingtransmissive volume holographic gratings has been developed in the prior art, that is, an incident beam irradiates gratings to generate positive and negative first-order diffraction orders, and the incident beam and the diffracted beam are incident from the same side of a recording medium and converge at a designated position to generate exposure interference fringes. However, this method can fabricate transmissive volume holographic gratings. Meanwhile, since the incident beam is incident in air and passes through media such as a photomask, a transparent substrate and a recording medium, multiple interface refraction and reflection beams will be generated. These beams will further converge with the incident beam and form multiple sets of parasitic gratings or optical artifacts in the recording medium, which will further lead to problems such as reduced diffraction efficiency and increased haze of the volume holographic gratings.

In addition, according to Bragg's theorem, under a certain refractive index contrast, the diffraction efficiency of transmissive volume holographic gratings changes sinusoidally with the increase of gratings thickness, and the diffraction efficiency has a maximum value, while the diffraction efficiency of reflection-type volume holographic gratings changes logarithmically with the increase of grating thickness and gradually approaches 100%. Generally, in order to achieve high diffraction efficiency, it is often necessary to develop materials with high refractive index contrast, such as dispersible polymer liquid crystals. However, developing new materials takes a long time and may lead to changes in other properties, such as haze, thermal expansion rate and the like.

Compared with transmissive volume holographic gratings, reflection-type volume holographic gratings are expected to achieve nearly 100% diffraction efficiency by increasing the grating thickness on the premise of low refractive index contrast, and finally obtain better augmented display effects. However, traditional dual-beam exposure faces many problems and is difficult to achieve mass fabrication of volume holographic gratings, and the exposure method for fabricating reflection-type volume holographic gratings based on a substrate coated with a multi-layer reflective film and a Lloyd mirror is difficult to meet the flexible, large-angle, multi-region and modulatable exposure requirements. Therefore, the prior art achieves transmissive volume holographic gratings through grating diffraction beam splitting, but the diffraction efficiency thereof is still limited by the refractive index contrast of the material, thereby limiting the fabricating efficiency of volume holographic gratings.

Existing fabricating solutions for reflection-type volume holographic gratings, whether through reflective films or Lloyd mirrors, cannot meet the fabricating requirements of flexible, large-angle, multi-region and other multi-degree-of-freedom modulation.

In order to overcome the above problems in the prior art, the embodiments of the present disclosure adopt an optical diffraction structure to realize reflective diffraction beam splitting. The reflected diffracted beam and the original beam converge to enable fabrication of reflection-type volume holographic gratings meeting the multi-degree-of-freedom modulation requirements, which can make full use of all photosensitive medium materials, and theoretically achieve nearly 100% diffraction efficiency by increasing the thickness of the photosensitive medium materials.

The embodiments of the present disclosure provide an apparatus and a method for fabricating reflection-type volume holographic gratings capable of realizing multi-degree-of-freedom modulation. The apparatus for fabricating reflection-type volume holographic gratings includes an exposure module, and the exposure module includes a photomask with at least one optical diffraction structure, a recording medium, a coupling prism and an exposure modulation unit. The coupling prism and the exposure modulation unit are used to adjust the light angles of the incident recording beam and the reflected diffracted beam incident on the recording medium or adjust the exposure parameters, so as to change parameters such as grating refractive index distribution, period and inclination angle, thereby realizing the fabrication of volume holographic gratings through one or more optical diffraction structures. The method is simple, efficient, rich in functions and suitable for various photosensitive medium materials, thus expected to meet the stringent requirements of next-generation augmented reality (AR) systems for optical display modules.

The method provided by some embodiments will be described in detail below with reference to the accompanying drawings.

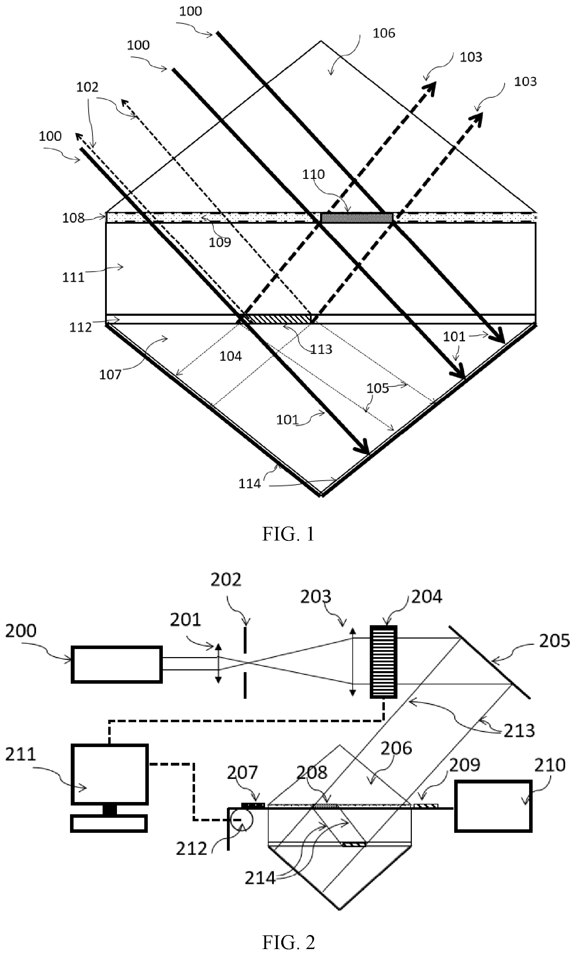

The apparatus for fabricating reflection-type volume holographic gratings provided by some embodiments includes: a light source and an exposure module located on a light-emitting optical path of the light source; as shown in FIG. 1, the exposure module includes: a photomask 112 with at least one optical diffraction structure 113, a recording medium 110, a coupling prism (the coupling prism includes a first coupling prism 106 and a second coupling prism 107) and an exposure modulation unit; the photomask 112, the recording medium 110 and the exposure modulation unit are disposed between the first coupling prism 106 and the second coupling prism 107.

The light source is configured to provide an incident recording beam.

The optical diffraction structure 113 on the photomask 112 is configured to receive an incident recording beam 100 and diffract and split the incident recording beam 100 to obtain a reflected diffracted beam, in which the reflected diffracted beam includes: a zero-order diffracted beam 102 reflected by the optical diffraction structure, and a positive or negative first-order diffracted beam 103.

The first coupling prism 106 and the second coupling prism 107 are configured to adjust an angle at which the incident recording beam 100 is incident into the photomask 112, so that the incident recording beam 100 is incident on the recording medium 110 at a preset angle, and reduce background interference noise caused by non-ideal refraction and reflection of the incident recording beam on an interface, so as to further improve the signal-to-noise ratio of target interference fringes.

The recording medium 110 is configured to generate stable interference fringes according to the incident recording beam 100 and the positive or negative first-order diffracted beam 103 and change the refractive index to form volume holographic gratings.

The exposure modulation unit is configured to control exposure parameters on the recording medium to obtain exposed reflection-type volume holographic gratings.

In the apparatus for fabricating reflection-type volume holographic gratings provided by some embodiments, a light source is first used to provide an incident recording beam. In some embodiments, a laser is used to provide the incident recording beam in order to obtain more stable interference fringes.

In some embodiments, the exposure modulation unit includes: a gap spacer 108 and a transparent spacer 111; the recording medium 110 is embedded in the gap spacer 108, and the transparent spacer 111 is disposed between the gap spacer 108 and the photomask 112.

With reference to FIG. 1, an incident recording beam 100 emitted from a light source passes through a prism above the gap spacer 108 and is respectively incident into the gap spacer 108 and the recording medium 110 located in the gap spacer 108; and beams transmitted from the gap spacer 108 and the recording medium 110 are sequentially incident into the transparent spacer 111 and the photomask 112, and then input into the second coupling prism 107 located below the photomask 112. After the incident recording beam 100 is incident on the optical diffraction structure 113 on the photomask 112, it is diffracted and split by the optical diffraction structure 113 to obtain a reflected diffracted beam, in which the reflected diffracted beam includes a zero-order diffracted beam 102 and a positive or negative first-order diffracted beam 103. In some embodiments, the positive or negative first-order diffracted beam 103 transmitted from the optical diffraction structure 113 and the zero-order diffracted beam 105 transmitted from the optical diffraction structure 113 are respectively incident into the first coupling prism 106 and the second coupling prism 107. The exposure module further includes: an absorption medium layer 114 disposed on a surface of the second coupling prism 107; the absorption medium layer 114 is configured to absorb excess incident recording beams and transmitted beams introduced therein to avoid generating excess parasitic gratings or optical artifacts.

In some embodiments, the incident recording beam 100 and the positive or negative first-order diffracted beam 103 are transmitted into the recording medium 110 to generate stable interference fringes and change the refractive index of the recording medium 110 to obtain holographic gratings. The first coupling prism 106 makes the incident recording beam incident on the photomask 112 at a preset incident angle, and the gap spacer 108 and the transparent spacer 111 control exposure parameters on the recording medium 110 to realize adjustment of the exposure parameters and meet the fabricating requirements of reflection-type volume holographic gratings with multi-degree-of-freedom modulation, so that parameters such as grating refractive index distribution, period and exposure position can be changed.

In some embodiments, volume holographic gratings with different parameters can be fabricated by changing design parameters of the optical diffraction structure 113 in the photomask 112, for example, variable-period volume holographic gratings are fabricated by designing a periodic change of diffraction parameters in the optical diffraction structure 113.

In some embodiments, the apparatus for fabricating reflection-type volume holographic gratings further includes: at least one rotatable transflective mirror disposed on an optical path of the incident recording beam to realize multi-beam multi-region exposure.

The rotatable transflective mirror is configured to adjust an incident angle at which the incident recording beam is transmitted to the recording medium; in which each rotatable transflective mirror is disposed corresponding to a recording medium on different regions of the photomask respectively, so that exposure parameters of the recording medium on different regions are different. The exposure parameters include, but are not limited to, parameters such as wavelength, phase, polarization, amplitude and incident angle of the incident beam.

In some embodiments, with reference to FIG. 1, a refractive index matching liquid 109 is filled in the gap spacer 108; the refractive index matching liquid 109 is configured to fill an air gap between the coupling prism (the coupling prism includes the first coupling prism 106 and the second coupling prism 107) and the recording medium 110.

In some embodiments, the recording medium includes one or more materials selected from the group consisting of a photopolymer, photosensitive glass, a photorefractive crystal, a polymer-dispersed liquid crystal, dichromated gelatin, and silver halide gelatin to achieve a better exposure effect.

In some embodiments, a surface shape of the optical diffraction structure is planar or curved, and the optical diffraction structure is a micro-nano optical structure or an optical micro-nano adjustable device. Specifically, the optical diffraction structure is one or more of micro-nano optical structures such as amplitude grating, phase grating, diffractive optical element, volume holographic grating and metasurface grating. The surface shape of the optical diffraction structure can be set to be spherical. In addition, the optical diffraction structure adopted in the present embodiment can be used to fabricate planar gratings or curved gratings, and can meet the requirements of various optical elements with different functions, such as volume holographic lenses for focusing, volume holographic gratings for display, volume holographic encoding and decoding for data storage and other applications.

In some embodiments, with reference to FIG. 2, the apparatus for fabricating reflection-type volume holographic gratings further includes: a collimation and beam-expansion system sequentially arranged on an exit optical path of the light source 200 to collimate and expand the incident recording beam. In some embodiments, the collimation and beam-expansion system includes: a focusing lens 201, a pinhole aperture 202 and a collimating lens 203.

The focusing lens 201 is configured to focus the incident recording beam emitted from the light source 200.

The pinhole aperture 202 is configured to filter and adjust a beam diameter of the incident recording beam introduced from the focusing lens 201.

The collimating lens 203 is configured to collimate the incident recording beam emitted from the pinhole aperture 202.

An incident recording beam emitted from the light source is collimated and expanded by the collimation and beam-expansion system to obtain a collimated and expanded incident recording beam 213, which is modulated by an acousto-optic modulator 204 and then transmitted to a rotatable reflecting mirror 205, and reflected by the rotatable reflecting mirror 205 to the exposure module. The incident recording beam 213 and a positive or negative first-order diffracted beam 214 obtained by diffraction of the optical diffraction structure in the photomask generate interference fringes in the recording medium 208 in the exposure module, and the refractive index of the recording medium 208 changes. A plurality of recording media 208, including an unexposed recording medium 207 and an exposed recording medium 208, are disposed in the exposure module. After the recording medium is exposed, reflection-type volume holographic gratings 209 are obtained. After the exposure is completed, a grating packaging device 210 is used to package the prepared waveguide lens with the reflection-type volume holographic gratings. During the process for fabricating the holographic gratings, an industrial control device 211 is used to control the operation of a roll-to-roll automatic feeding device 212 and adjust parameters of the incident recording beam 213 in the acousto-optic modulator 204, so that the exposure time, the feeding speed of the roll-to-roll automatic feeding device, various parameters of the incident beam and the like are matched with each other to realize automatic production.

In some embodiments, a plurality of optical diffraction structures are disposed on the photomask to realize multi-region exposure and obtain a multi-degree-of-freedom modulation effect, and the recording medium is provided with a plurality of recording regions disposed at different positions for recording volume holographic gratings; each recording region is the same or different region of the same medium, or the same or different region of different media; parameters of each optical diffraction structure can be the same or different, and after each recording region is synchronously exposed under the exposure parameters, a plurality of volume holographic gratings with different grating parameters are respectively obtained, and the plurality of volume holographic gratings are coupling-in gratings, and/or coupling-out gratings, and/or turning gratings.

Since a plurality of recording regions can be provided in the same medium, each recording region can be a different region in the same medium, and since the set exposure parameters are different, each recording region can be the same region in the same medium. In some embodiments, each recording region can be the same region or different regions of different media, as long as under different exposure parameters, the recording region can meet the conditions of generating interference fringes according to the incident recording beam and reflected diffracted beam, and forming a refractive index difference between an interference intensity enhancement region and an interference intensity attenuation region to form volume holographic gratings.

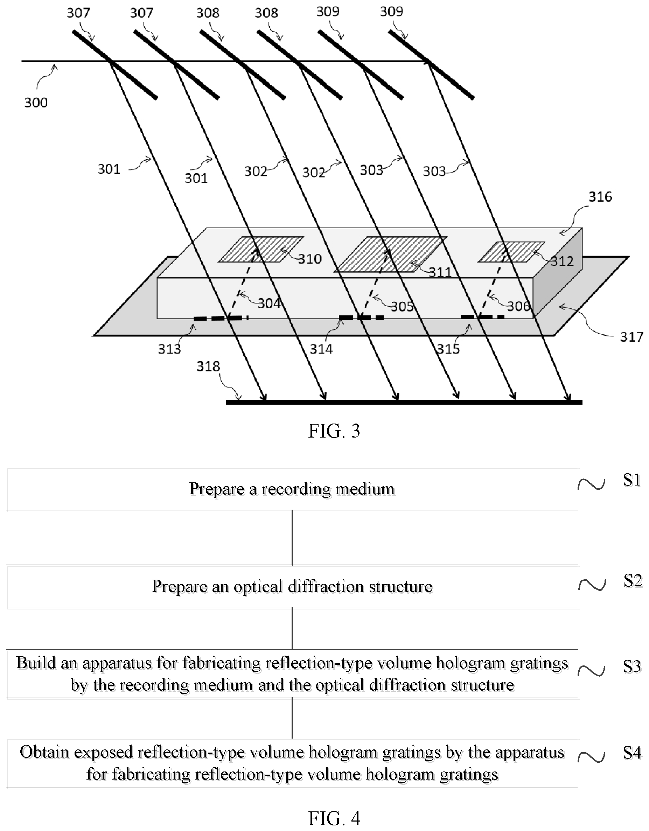

With reference to FIG. 3, taking three optical diffraction structures with different parameters disposed on the photomask as an example, a first optical diffraction structure 313, a second optical diffraction structure 314 and a third optical diffraction structure 315 with different parameters are disposed on the photomask 317; recording media disposed at different positions includes: a first recording medium, a second recording medium and a third recording medium. After the first recording medium, the second recording medium and the third recording medium are synchronously exposed, a coupling-in grating 310, a turning grating 311 and a coupling-out grating 312 with different grating parameters are respectively obtained.

With reference to FIG. 3, transparent spacers 316 are disposed on the photomask 317, a plurality of recording media are sequentially arranged between the transparent spacers 316, and a plurality of rotatable transflective mirrors are sequentially arranged above the transparent spacers 316, which are respectively a first rotatable transflective mirror 307, a second rotatable transflective mirror 308 and a third rotatable transflective mirror 309. In some embodiments, transmittances of the first rotatable transflective mirror 307, the second rotatable transflective mirror 308 and the third rotatable transflective mirror 309 can be adjusted as required, so that angles of beams incident on each recording medium are different, and beams transmitted by a previous rotatable transflective mirror can be continuously transmitted and reflected to different angles by a next rotatable transflective mirror, thereby realizing modulation of the incident recording beam incident on the recording medium.

In some embodiments, an incident recording beam 301 emitted from a light source is reflected by the rotatable transflective mirrors and then transmitted to each recording medium of the photomask. The rotatable transflective mirrors can change the angle of the incident recording beam 301. On the photomask 112, the at least one optical diffraction structure includes a plurality of optical diffraction structures with different parameters. After each optical diffraction structure diffracts the incident recording beam 301, a first diffracted beam 304, a second diffracted beam 305 and a third diffracted beam 306 are respectively generated, each being a positive or negative first-order diffracted beam. The incident recording beam 301 and the reflected diffracted beam converge at the recording medium to form stable interference fringes, thereby forming volume holographic gratings in each recording medium. In some embodiments, according to different grating parameters, a coupling-in grating 310, a turning grating 311 and a coupling-out grating 312 are respectively formed in each recording medium, and the transparent spacer 316 can be used to change the positional relationship among the coupling-in grating 310, the turning grating 311 and the coupling-out grating 312. In some embodiments, an absorption medium layer is disposed below the photomask 317 to absorb excess transmitted beams to avoid generating excess parasitic gratings or optical artifacts.

Since the exposure module in the apparatus for fabricating reflection-type volume holographic gratings provided by some embodiments can utilize a plurality of transflective mirrors to realize multi-beam multi-region exposure, the fabricating apparatus provided by some embodiments can realize reflection-type volume holographic gratings with multi-degree-of-freedom modulation through flexible arrangement, thereby meeting the fabricating of large-angle, multi-region reflection-type volume holographic gratings.

The apparatus, method and device for fabricating reflection-type volume holographic gratings capable of realizing multi-degree-of-freedom modulation proposed by the present disclosure solve the problems of low fabricating efficiency, susceptibility to environmental influence, difficulty in realizing multi-degree-of-freedom (large-angle, multi-region) modulation and the like of volume holographic gratings fabricated in the prior art by adopting an optical diffraction structure to realize diffraction beam splitting for fabricating volume holographic gratings.

On the basis of providing the above apparatus for fabricating reflection-type volume holographic gratings, the present disclosure further discloses a method for fabricating reflection-type volume holographic gratings, including the following steps:
Step S1, preparing a recording medium; preparing a photosensitive medium material; the photosensitive medium material includes: a photopolymer, photosensitive glass, a photorefractive crystal, a polymer-dispersed liquid crystal, dichromated gelatin, or silver halide gelatin.
Step S2, preparing an optical diffraction structure; the optical diffraction structure includes, diffractive optical elements such as amplitude grating, phase grating, volume holographic grating and metasurface, and the shape of the optical diffraction structure can be spherical, freeform surface or aspherical surface. The size, shape and number of the optical diffraction structures are designed according to preset design parameters.
Step S3, building an apparatus for fabricating reflection-type volume holographic gratings by the recording medium and the optical diffraction structure; first building an exposure optical path in the exposure module according to the structure of each component in the exposure module, then sequentially building each component in the fabricating apparatus, and finally obtaining a built apparatus for fabricating reflection-type volume holographic gratings.
Step S4, obtaining exposed reflection-type volume holographic gratings by the apparatus for fabricating reflection-type volume holographic gratings.

An angle at which the incident recording beam is incident into the recording medium is adjusted according to a preset incident angle, the exposure modulation unit is adjusted according to a preset exposure parameter, a position region of each optical diffraction structure on the photomask is arranged, and a position of the rotatable transflective mirror is adjusted. The adjusted fabricating apparatus is used to realize the fabrication of the reflection-type volume holographic gratings, and exposed reflection-type volume holographic gratings are obtained.

With reference to FIG. 4, an embodiment of the present disclosure provides a method for fabricating reflection-type volume holographic gratings. First, a photosensitive medium material is prepared. Second, an optical diffraction structure (for example, an optical diffraction plane) is prepared. Then, a holographic recording system is built, that is, optical elements such as a light source module, an optical diffraction structure (for example, an optical diffraction plane), a reflecting mirror and a beam splitter are selected according to the application requirements, a laser beam is guided from a laser, and divided into two beams: an original beam and a diffracted beam through the optical diffraction structure (for example, an optical diffraction plane), and the two beams overlap on a specific area of a recording plate coated with the photosensitive medium material. Finally, a holographic pattern is recorded, and an electronic shutter is opened to record an interference pattern of the two beams in the photosensitive medium material.

After exposed holographic gratings are obtained, performance analysis and testing are performed on the fabricated holographic gratings, detection and analysis are performed according to optical properties of the holographic interference sample, such as diffraction efficiency, refractive index contrast, thermal expansion rate, haze, long-term stability, hightemperature and high-humidity characteristics and the like. And, error analysis and system improvement and optimization are performed, errors existing in the system are confirmed according to performance analysis results of the holographic sample, the whole system is improved and optimized. Finally, a formula of the photosensitive medium material, recording parameters of the exposure system, optical elements such as the optical diffraction plane and the like are adjusted to improve the recording effect and image quality, and further realize the fabrication of reflection-type volume holographic gratings with multi-degree-of-freedom modulation such as large angle and multi-region.

In some embodiments, by designing the optical diffraction structure or adding optical elements such as light source modules with different wavelengths, reflecting mirrors and beam splitters, the present disclosure can flexibly change the exposure parameters to meet the fabricating requirements of reflection-type volume holographic gratings with multi-degree-of-freedom modulation, so that parameters such as grating period, duty cycle and inclination angle can be further modulated. In some embodiments, volume holographic gratings with different parameters, such as variable-period volume holographic gratings, can be fabricated by changing design parameters of the optical diffraction structure in the photomask. The optical diffraction structure adopted in the embodiments of the present disclosure can adopt any optical element capable of generating diffraction, which greatly expands the fabricating flexibility. The holographic exposure medium adopted in the present disclosure is any medium sensitive to light, which can meet the requirements of various materials in various fields, such as resin can be adopted in the AR field requiring light weight, glass can be adopted in the optical computing field requiring reliability, and specially fabricated photosensitive media such as high temperature resistance, corrosion resistance and radiation resistance can be adopted in the military field.

The present embodiment discloses an apparatus and a method for fabricating reflection-type volume holographic gratings. The apparatus for fabricating reflection-type volume holographic gratings includes: a light source and an exposure module; the exposure module includes: a photomask with at least one optical diffraction structure, a recording medium, a coupling prism and an exposure modulation unit. An incident recording beam provided by the light source is incident on the optical diffraction structure on the photomask, and the optical diffraction structure receives the incident recording beam and diffracts and splits the incident recording beam to obtain a reflected diffracted beam; the coupling prism adjusts an angle at which the incident recording beam is incident into the photomask, so that the incident recording beam is incident on the recording medium at a preset angle, and the recording medium generates interference fringes according to the incident recording beam and the reflected diffracted beam and changes the refractive index to form volume holographic gratings; the exposure modulation unit controls exposure parameters on the recording medium to obtain exposed reflection-type volume holographic gratings. In the apparatus of the present embodiment, reflection-type volume holographic gratings with multi-degree-of-freedom modulation are generated by adjusting parameters of the incident recording beam, such as wavelength, phase, polarization, amplitude, incident angle and the like, and controlling the exposure parameters by using the exposure modulation unit, and the implementation is simple, efficient and mass-producible.

Other embodiments of the present disclosure will be readily apparent to those skilled in the art upon consideration of the specification and practice of the embodiments in the present disclosure. The present disclosure aims to cover any variations, uses or adaptations of the embodiments disclosed in the present disclosure, which follow the general principles of the present disclosure and include common general knowledge or conventional technical means in the technical field not disclosed in the present disclosure. The specification and embodiments are to be regarded as exemplary only, with the true scope and spirit of the present disclosure being indicated by the following claims.

The above-described embodiments express several implementation modes of the present disclosure, and the descriptions thereof are specific and detailed, but should not be construed as limiting the patent scope of the present disclosure. It should be noted that, for those of ordinary skill in the art, a number of variations and modifications can be made without departing from the concept of the present disclosure, and these variations and modifications all fall within the protection scope of the present disclosure. Therefore, the patent protection scope of the present disclosure shall be subject to the appended claims.

## Claims

1. An apparatus for fabricating reflection-type volume holographic gratings, comprising: a light source and an exposure module located on a light-emitting optical path of the light source;
wherein the exposure module comprises: a photomask with at least one optical diffraction structure, a recording medium, a coupling prism, and an exposure modulation unit;
the light source is configured to provide an incident recording beam;
the at least one optical diffraction structure on the photomask is configured to receive the incident recording beam and diffract and split the incident recording beam to obtain a reflected diffracted beam;
the coupling prism is configured to adjust an angle at which the incident recording beam is incident into the photomask, wherein the incident recording beam is incident on the recording medium at a preset angle;
the recording medium is configured to generate interference fringes according to the incident recording beam and the reflected diffracted beam, and form a refractive index difference between an interference intensity enhancement region and an interference intensity attenuation region to form volume holographic gratings;
the exposure modulation unit is configured to control exposure parameters on the recording medium to obtain exposed reflection-type volume holographic gratings.

2. The apparatus for fabricating reflection-type volume holographic gratings according to claim 1, wherein the exposure modulation unit comprises: a gap spacer and a transparent spacer; the recording medium is embedded in the gap spacer, and the transparent spacer is disposed between the gap spacer and the photomask.

3. The apparatus for fabricating reflection-type volume holographic gratings according to claim 1, further comprising: at least one rotatable transflective mirror disposed on an optical path of the incident recording beam;
the rotatable transflective mirror is configured to adjust an incident angle at which the incident recording beam is transmitted to the recording medium; wherein each rotatable transflective mirror is disposed corresponding to exposure regions at different positions of the recording medium respectively, wherein exposure parameters of the recording medium on different regions are different; the exposure parameters are one or more of wavelength, phase, polarization, amplitude and incident angle of the incident beam.

4. The apparatus for fabricating reflection-type volume holographic gratings according to claim 1, wherein the exposure module further comprises: an absorption medium layer disposed on a surface of the coupling prism;
the absorption medium layer is configured to absorb excess incident recording beams and transmitted beams passing through the optical diffraction structure.

5. The apparatus for fabricating reflection-type volume holographic gratings according to claim 1, wherein a surface shape of the optical diffraction structure is planar or curved, and the optical diffraction structure is a micro-nano optical structure or an optical micro-nano adjustable device.

6. The apparatus for fabricating reflection-type volume holographic gratings according to claim 2, wherein a refractive index matching liquid is filled in the gap spacer;
the refractive index matching liquid is configured to fill an air gap between the coupling prism and the recording medium.

7. The apparatus for fabricating reflection-type volume holographic gratings according to claim 1, wherein the recording medium comprises one or more materials selected from the group consisting of a photopolymer, photosensitive glass, a photorefractive crystal, a polymer-dispersed liquid crystal, dichromated gelatin, and silver halide gelatin.

8. The apparatus for fabricating reflection-type volume holographic gratings according to claim 1, further comprising: a focusing lens, a pinhole aperture and/or a collimating lens sequentially arranged on an exit optical path of the light source;
the focusing lens is configured to focus the incident recording beam emitted from the light source;
the pinhole aperture is configured to filter and adjust a beam diameter of the incident recording beam introduced from the focusing lens;
the collimating lens is configured to collimate the incident recording beam emitted from the pinhole aperture.

9. The apparatus for fabricating reflection-type volume holographic gratings according to claim 1, wherein the at least one optical diffraction structure comprises a plurality of optical diffraction structures with different parameters; the recording medium is provided with a plurality of recording regions disposed at different positions for recording volume holographic gratings; and the plurality of optical diffraction structures are in one-to-one correspondence with the plurality of recording regions;
each recording region is the same or different region of the same medium, or the same or different region of different media; after each recording region is synchronously exposed under the exposure parameters, a plurality of volume holographic gratings with different grating parameters are respectively obtained, and the plurality of volume holographic gratings are coupling-in gratings, and/or coupling-out gratings, and/or turning gratings.

10. The apparatus for fabricating reflection-type volume holographic gratings according to claim 1, wherein the coupling prism comprises a first coupling prism and a second coupling prism;
the photomask, the recording medium and the exposure modulation unit are disposed between the first coupling prism and the second coupling prism;
the first coupling prism and the second coupling prism are configured to adjust an angle at which the incident recording beam is incident into the photomask; wherein the incident recording beam is incident on the recording medium at a preset angle.

11. The apparatus for fabricating reflection-type volume holographic gratings according to claim 10, wherein the exposure module further comprises: an absorption medium layer disposed on a surface of the second coupling prism.

12. A method for fabricating reflection-type volume holographic gratings, comprising:
preparing a recording medium;
preparing an optical diffraction structure;
building an apparatus for fabricating reflection-type volume holographic gratings according to the recording medium and the optical diffraction structure;
obtaining exposed reflection-type volume holographic gratings by the apparatus for fabricating reflection-type volume holographic gratings.

13. The method for fabricating reflection-type volume holographic gratings according to claim 12, wherein the obtaining exposed reflection-type volume holographic gratings by the apparatus for fabricating reflection-type volume holographic gratings comprises:
adjusting the apparatus for fabricating reflection-type volume holographic gratings;
fabricating the reflection-type volume holographic gratings by the adjusted apparatus for fabricating reflection-type volume holographic gratings to obtain exposed reflection-type volume holographic gratings.

14. The method for fabricating reflection-type volume holographic gratings according to claim 13, wherein the apparatus for fabricating reflection-type volume holographic gratings comprises the recording medium;
the adjusting the apparatus for fabricating reflection-type volume holographic gratings comprises:
adjusting an angle at which the incident recording beam is incident into the recording medium according to a preset incident angle.

15. The method for fabricating reflection-type volume holographic gratings according to claim 13, wherein the apparatus for fabricating reflection-type volume holographic gratings comprises an exposure modulation unit;
the adjusting the apparatus for fabricating reflection-type volume holographic gratings comprises:
adjusting the exposure modulation unit according to a preset exposure parameter.

16. The method for fabricating reflection-type volume holographic gratings according to claim 13, wherein the apparatus for fabricating reflection-type volume holographic gratings comprises a photomask with at least one optical diffraction structure;
the adjusting the apparatus for fabricating reflection-type volume holographic gratings comprises:
arranging a position region of each optical diffraction structure on the photomask.

17. The method for fabricating reflection-type volume holographic gratings according to claim 13, wherein the apparatus for fabricating reflection-type volume holographic gratings comprises at least one rotatable transflective mirror disposed on an optical path of the incident recording beam;
the adjusting the apparatus for fabricating reflection-type volume holographic gratings comprises:
adjusting a position of the rotatable transflective mirror.
